# EUROPEAN PATENT APPLICATION

(11) **EP 4 697 773 A1**
(43) Date of publication of application: **18.02.2026**
(21) Application number: 25192480.9
(22) Date of filing: 29.07.2025
(51) Int. Cl.: H04W 12/06, H04W 12/50, H04W 4/80

(54) **DUAL BLUETOOTH CONNECTION MANAGEMENT METHOD AND SYSTEM**

(30) Priority: 12.08.2024 TW 113130160
(71) Applicant: Kwang Yang Motor Co., Ltd., Kaohsiung City (TW)
(72) Inventor: WU, Kuo-Chen, Kaohsiung (TW); HOU, Yi-An, Kaohsiung (TW)
(74) Representative: Viering, Jentschura & Partner mbB Patent- und Rechtsanwälte

(57) **Abstract**

Dual Bluetooth connection management method and system, adapted to an electronic device (110), including a first Bluetooth unit (112), a second Bluetooth unit (114), and a processing unit (116), are provided. The first Bluetooth unit (112) connects to a first electronic device (120) through a first wireless network (132) to obtain a first identification data corresponding to the first electronic device (120), and performs an authentication procedure with the first electronic device (120) based on the first identification data. When the first electronic device (120) is authenticated, the processing unit (116) establishes a connection whitelist based on the first identification data, wherein the connection whitelist is provided to the first Bluetooth unit (112) and the second Bluetooth unit (114). The second Bluetooth unit (114) accepts data transmitted from the first electronic device (120) in the connection whitelist.

## Description

### 1. Field of the Invention

The present invention relates to a dual Bluetooth connection management method and a system thereof, and more particularly to a method and a system that manages a connection whitelist within two Bluetooth units in an electronic device.

### 2. Description of Related Art

In recent years, with an advancement of electronic information technology, a development trend of vehicles is becoming more and more intelligent. Beyond the fundamental transportation function, enhancing safety and offering a wider range of peripheral applications have become key areas of focus within the industry.

On the other hand, with the rise of environmental awareness and the progress of electric vehicle technology, developing electric vehicles powered by electricity to replace traditional vehicles powered by fossil fuels has gradually become an important goal in the automotive field, making electric vehicles more and more popular. Generally speaking, electric vehicles are equipped with a greater number of electronic components and devices, and can be combined with users' mobile devices to provide more personalized applications and experiences.

The electronic components and the electronic devices in the electric vehicles usually wirelessly connect with various peripheral devices, such as through a Bluetooth network. Moreover, the electronic components and the electronic devices in the electric vehicles may each have an independent connection unit, such as a classic Bluetooth device or a Bluetooth Low Energy device, to connect with a specific electronic device, such as a user's mobile phone. Without proper management, the connection units of different electronic components and electronic devices must each perform an authentication procedure with a specific electronic device to receive a connection and data transmission of the specific electronic device. When a large number of electronic components and electronic devices are configured in the electric vehicle, the authentication procedure of the corresponding specific electronic device must be repeated in large quantities, which is very complicated and inefficient for users.

In view of this, the present invention provides a dual Bluetooth connection management method and a system thereof.

An embodiment of the dual Bluetooth connection management method is adapted to an electronic device including a first Bluetooth unit, a second Bluetooth unit, and a processing unit. The first Bluetooth unit connects to a first electronic device through a first wireless network to obtain a first identification data corresponding to the first electronic device, and performs an authentication procedure to determine whether the first electronic device is authenticated based on the first identification data. When the first electronic device is authenticated, a connection whitelist is established based on the first identification data by the processing unit. Moreover, the connection whitelist is provided to the first Bluetooth unit and the second Bluetooth unit at the same time by the processing unit. Additionally, the second Bluetooth unit accepts a data transmitted from the first electronic device corresponding to the connection whitelist.

An embodiment of the dual Bluetooth connection management system is designed for use in an electronic device, including a first Bluetooth unit, a second Bluetooth unit, and a processing unit. The first Bluetooth unit connects to a first electronic device through a first wireless network, and obtains a first identification data corresponding to the first electronic device. The first Bluetooth unit then performs an authentication procedure to determine whether the first electronic device is authenticated based on the first identification data. When the first electronic device is authenticated, the processing unit establishes a connection whitelist based on the first identification data, and provides the connection whitelist to the first Bluetooth unit and the second Bluetooth unit at the same time. Additionally, the second Bluetooth unit accepts a data transmitted from the first electronic device corresponding to the connection whitelist.

In some embodiments, the second Bluetooth unit connects to the first electronic device through a second wireless network to obtain the first identification data corresponding to the first electronic device, and determines whether the first identification data is within the connection whitelist. When the first identification data is within the connection whitelist, the second Bluetooth unit suspends the authentication procedure, and receives the data transmitted from the first electronic device. When the first identification data is without the connection whitelist, the second Bluetooth unit performs the authentication procedure.

In some embodiments, the processing unit saves the connection whitelist to a first storage unit corresponding to the first Bluetooth unit, and saves the connection whitelist to a second storage unit corresponding to the second Bluetooth unit.

In some embodiments, the first Bluetooth unit obtains a second identification data corresponding to a second electronic device. Furthermore, the processing unit re-establishes the connection whitelist based on the second identification data, and updates the connection whitelist containing the second identification data to the second storage unit corresponding to the second Bluetooth unit.

In some embodiments, the first Bluetooth unit is a classic Bluetooth device, and the second Bluetooth unit is a Bluetooth Low Energy device.

The above method of the present invention can exist in the form of program code. When the program code is loaded and executed by a machine, the machine becomes a device for implementing the present invention.

In order to make the above objects, features and advantages of the present invention more clearly understandable, the following embodiments are specifically cited and described in detail with the accompanying drawings.

In the drawings:
Fig. 1 is a schematic diagram of one embodiment of a dual Bluetooth connection management system of the present invention.
Fig. 2 is a schematic diagram of another embodiment of the dual Bluetooth connection management system of the present invention.
Fig. 3 is a flow diagram of one embodiment of a dual Bluetooth connection management method of the present invention.
Fig. 4 is a flow diagram of another embodiment of the dual Bluetooth connection management method of the present invention.
Fig. 5 is a flow diagram of still another embodiment of the dual Bluetooth connection management method of the present invention.
Fig. 6 is a flow diagram of further another embodiment of the dual Bluetooth connection management method of the present invention.

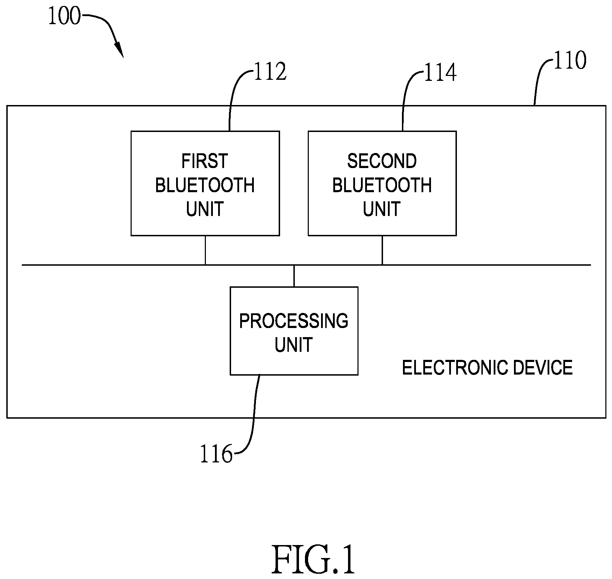

With reference to Fig. 1, Fig. 1 is a schematic diagram of one embodiment of a dual Bluetooth connection management system 100 of the present invention. The dual Bluetooth connection management system 100 is designed for use in an electronic device 110. It is worth noting that, in some embodiments, the electronic device 110 is mounted in a vehicle, including fuel vehicles or electric vehicles, such as electric scooters and electric cars. The electronic device 110 includes a first Bluetooth unit 112, a second Bluetooth unit 114, and a processing unit 116. It is worth mentioning that, in some embodiments, the first Bluetooth unit 112 is a classic Bluetooth device, and the second Bluetooth unit 114 is a Bluetooth Low Energy device. It should be emphasized that, in some embodiments, the first Bluetooth unit 112 and the second Bluetooth unit 114 can respectively include a storage unit (not shown in the figure). The first Bluetooth unit 112 and the second Bluetooth unit 114 can connect to other electronic devices with wireless connection capabilities through a Bluetooth network respectively. The processing unit 116 is electrically connected to the first Bluetooth unit 112 and the second Bluetooth unit 114, and can control the operation of all hardware and all software in the electronic device 110. A more detailed explanation will be presented in a subsequent section.

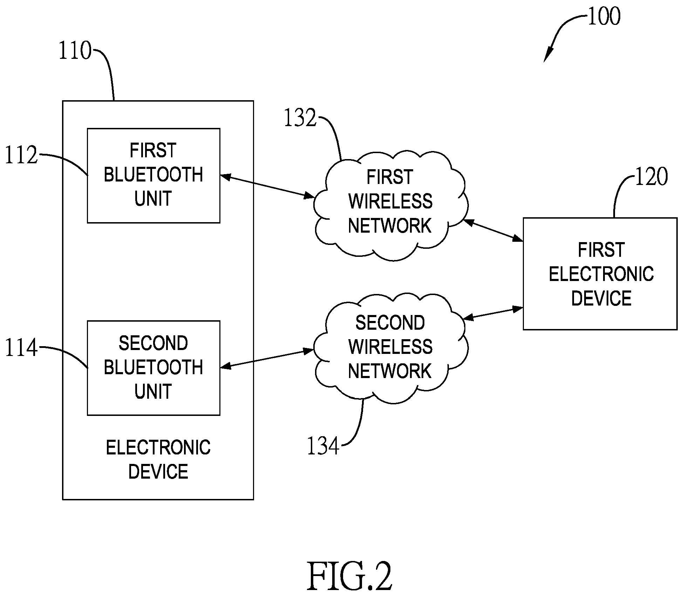

With reference to Fig. 2, Fig. 2 is a schematic diagram of another embodiment of the dual Bluetooth connection management system of the present invention. The dual Bluetooth connection management system 100 includes an electronic device 110 and a first electronic device 120. Similarly, in some embodiments, the electronic device 110 is mounted in a vehicle, including fuel vehicles or electric vehicles, such as electric scooters and electric cars. The electronic device 110 includes a first Bluetooth unit 112 and a second Bluetooth unit 114. In some embodiments, the first Bluetooth unit 112 is a classic Bluetooth device, and the second Bluetooth unit 114 is a Bluetooth Low Energy device. Similarly, the first Bluetooth unit 112 and the second Bluetooth unit 114 can each include a storage unit respectively (not shown in the figure). The first Bluetooth unit 112 can connect to the first electronic device 120 through a first wireless network 132, and the second Bluetooth unit 114 can connect to the first electronic device 120 through a second wireless network 134.

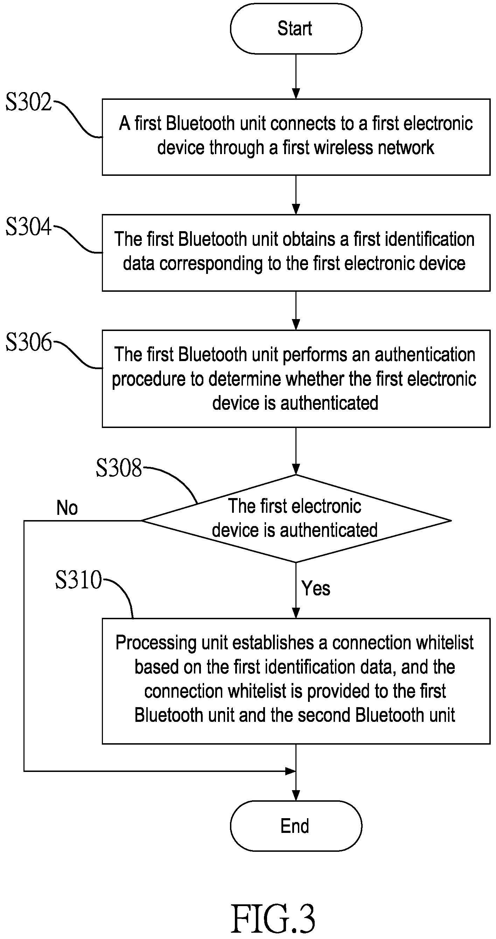

With reference to Fig. 3, Fig. 3 is a flow diagram of one embodiment of the dual Bluetooth connection management method of the present invention. The dual Bluetooth connection management method is designed for use in an electronic device 110. The electronic device 110 includes a first Bluetooth unit 112, a second Bluetooth unit 114, and a processing unit 116.

First, as in step S302, the first Bluetooth unit 112 connects to a first electronic device 120 through a first wireless network 132, such as a Bluetooth network, and as in step S304, the first Bluetooth unit 112 obtains a first identification data corresponding to the first electronic device 120. It is worth mentioning that, in some embodiments, the first Bluetooth unit 112 can be a classic Bluetooth device. Next, as in step S306, the first Bluetooth unit 112 performs an authentication procedure to determine whether the first electronic device 120 is authenticated based on the first identification data. As in step S308, when the first electronic device 102 is not authenticated, the procedure terminates. When the first electronic device 102 is authenticated, then as in step S310, the processing unit 116 establishes a connection whitelist based on the first identification data, and the connection whitelist is provided to the first Bluetooth unit 112 and the second Bluetooth unit 114 by the processing unit 116. It is worth noting that, in some embodiments, the second Bluetooth unit 114 can be a Bluetooth Low Energy device.

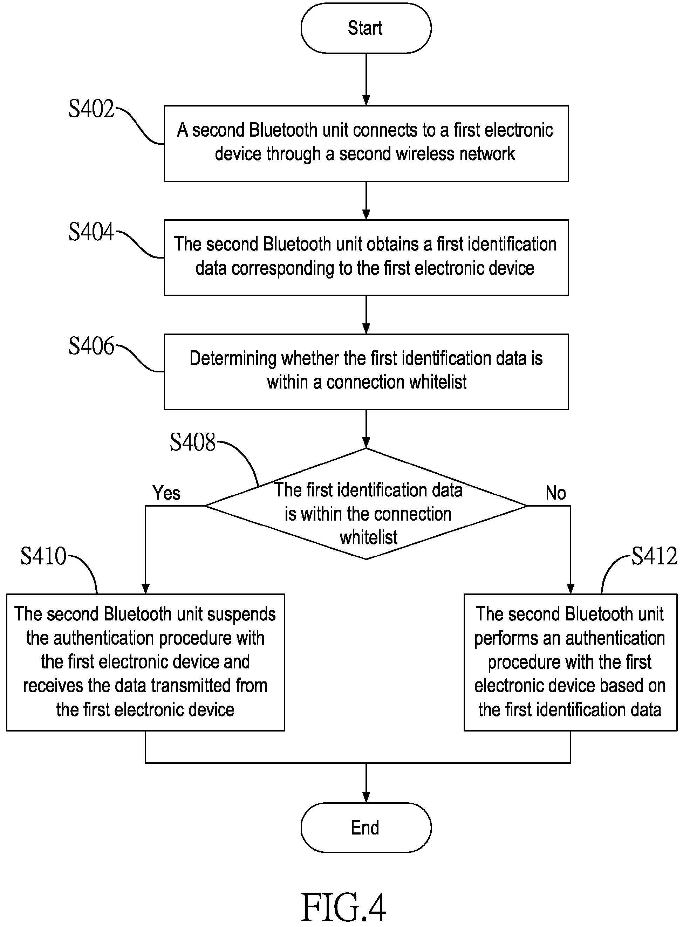

With reference to Fig. 4, Fig. 4 is a flow diagram of another embodiment of the dual Bluetooth connection management method of the present invention. The dual Bluetooth connection management method is designed for use in an electronic device 110, and the electronic device 110 includes a first Bluetooth unit 112 and a second Bluetooth unit 114. In the embodiment, the second Bluetooth unit 114 can accept a data transmitted from the first electronic device 120 corresponding to the connection whitelist.

First, as in step S402, the second Bluetooth unit 114 connects to the first electronic device 120 through a second wireless network 134, such as a Bluetooth network, and as in step S404, the second Bluetooth unit 114 obtains the first identification data corresponding to the first electronic device 120. Next, as in step S406, the second Bluetooth unit 114 determines whether the first identification data is within the connection whitelist. As in step S408, when the first identification data is within the connection whitelist, then as in step S410, the second Bluetooth unit 114 suspends the authentication procedure with the first electronic device 120 and receives the data transmitted from the corresponding first electronic device 120. When the first identification data is without the connection whitelist, then as in step S412, the second Bluetooth unit 114 performs the authentication procedure with the first electronic device 120 based on the first identification data. It is worth noting that, after the authentication operation with the corresponding first electronic device 120 is finished, the second Bluetooth unit 114 can then accept the data transmitted from the first electronic device 120.

It is worth mentioning that, in some embodiments, the electronic device 110 can include a storage unit for storing the aforementioned connection whitelist, and the first Bluetooth unit 112 and the second Bluetooth unit 114 can both access the connection whitelist within the storage unit.

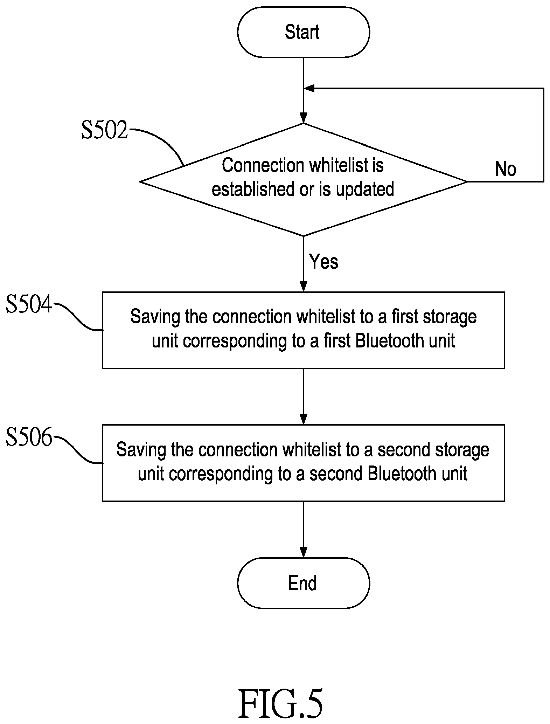

With reference to Fig. 5, Fig. 5 is a flow diagram of still another embodiment of the dual Bluetooth connection management method of the present invention. The dual Bluetooth connection management method is adapted to an electronic device 110, and the electronic device 110 includes a first Bluetooth unit 112, a second Bluetooth unit 114, and a processing unit 116, and the processing unit 116 is electrically connected to the first Bluetooth unit 112 and the second Bluetooth unit 114. In the embodiment, the first Bluetooth unit 112 includes a first storage unit and the second Bluetooth unit 114 includes a second storage unit. The first storage unit and the second storage unit store an original or a copy of the corresponding connection whitelist respectively. Furthermore, the connection whitelist will be stored synchronously in the corresponding storage units of the first Bluetooth unit 112 and the second Bluetooth unit 114.

First, as in step S502, the processing unit 116 determines whether the connection whitelist is either established or updated. If the connection unit is neither established nor updated, continue the determination. When the connection unit is either established or updated, then as in step S504, the processing unit 116 saves the connection whitelist to the first storage unit corresponding to the first Bluetooth unit 112, and as in step S506, the processing unit 116 saves the connection whitelist to the second storage unit corresponding to the second Bluetooth unit 114.

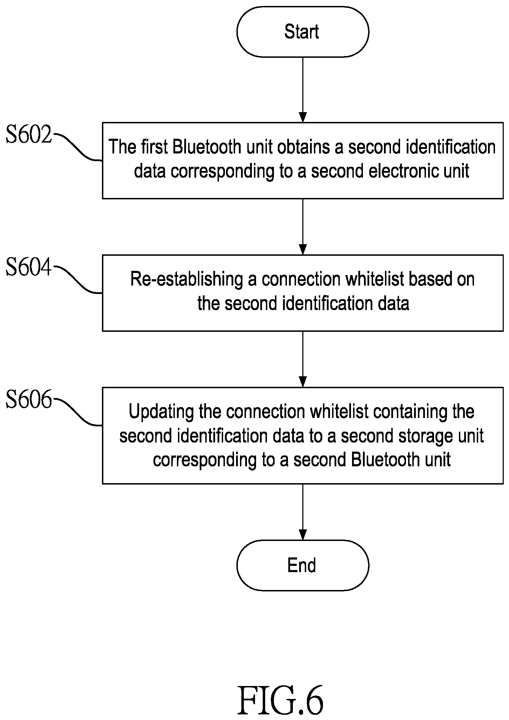

With reference to Fig. 6, Fig. 6 is a flow diagram of another embodiment of the dual Bluetooth connection management method of the present invention. The dual Bluetooth connection management method is designed for use in an electronic device 110, and the electronic device 110 includes a first Bluetooth unit 112, a second Bluetooth unit 114, and a processing unit 116. In the embodiment, the first Bluetooth unit 112 includes a first storage unit and the second Bluetooth unit 114 includes a second storage unit. The first storage unit and the second storage unit store an original or a copy of the corresponding connection whitelist respectively. Furthermore, the connection whitelist will be stored synchronously in the corresponding storage units of the first Bluetooth unit 112 and the second Bluetooth unit 114. Moreover, when one of the Bluetooth units updates the corresponding connection whitelist, the updated connection whitelist will also be updated to the other Bluetooth unit simultaneously.

First, as in step S602, the first Bluetooth unit 112 connects to a second electronic device to obtain a second identification data corresponding to the second electronic device, and the first Bluetooth unit 112 performs an authentication procedure with the second electronic device based on the second identification data. Next, as in step S604, the processing unit 116 re-establishes the connection whitelist based on the second identification data. After the connection whitelist is either re-established or updated, then as in step S606, the processing unit 116 updates the connection whitelist containing the second identification data to the second storage unit corresponding to the second Bluetooth unit 114.

Therefore, with the dual Bluetooth connection management method and the system thereof, the connection whitelist within the two Bluetooth units in the electronic device 110 can be managed, thereby reducing a large amount of repeated work and increasing the efficiency of related operations and management.

The method of the present invention, or specific forms or portions thereof, may exist as program code. The program code may be contained in a physical medium, such as a floppy disk, CD-ROM, hard drive, or any other machine-readable (e.g., computer-readable) storage medium, or a computer program product not limited to its external form, wherein, when the program code is loaded and executed by a machine, such as a computer, this machine becomes an apparatus for participating in the present invention. The program code may also be transmitted via a transmission medium, such as a wire or cable, optical fiber, or any form of transmission, wherein, when the program code is received, loaded, and executed by a machine, such as a computer, this machine becomes an apparatus for participating in the present invention. When implemented in a general-purpose processing unit, the program code, in conjunction with the processing unit, provides a unique apparatus that operates similarly to application-specific logic circuits.

While the present invention has been disclosed as above with preferred embodiments, it is not intended to limit the present invention. Any person skilled in the art can make slight modifications and embellishments without departing from the spirit and scope of the present invention. Therefore, the protection scope of the present invention shall be defined by the appended claims.

## Claims

1. A dual Bluetooth connection management method, adapted to an electronic device (110) comprising a first Bluetooth unit (112),a second Bluetooth unit (114) and a processing unit (116), and **characterized in that** the dual Bluetooth connection management method comprises steps of:
connecting to a first electronic device (120) through a first wireless network (132) to obtain a first identification data corresponding to the first electronic device (120) by the first Bluetooth unit (112);
performing an authentication procedure to determine whether the first electronic device (120) is authenticated based on the first identification data by the first Bluetooth unit (112);
when the first electronic device (120) is authenticated, establishing a connection whitelist based on the first identification data by the processing unit (116); wherein, the processing unit (116) provides the connection whitelist to the first Bluetooth unit (112) and the second Bluetooth unit (114); and
wherein, the second Bluetooth unit (114) accepts data transmitted from the first electronic device (120) corresponding to the connection whitelist.

2. The dual Bluetooth connection management method as claimed in claim 1, comprising further steps of:
connecting to the first electronic device (120) through a second wireless network (134) to obtain the first identification data corresponding to the first electronic device (120) by the second Bluetooth unit (114);
determining whether the first identification data is within the connection whitelist by the second Bluetooth unit (114);
when the first identification data is within the connection whitelist, suspending the authentication procedure by the second Bluetooth unit (114); and
when the first identification data is without the connection whitelist, performing the authentication procedure by the second Bluetooth unit (114).

3. The dual Bluetooth connection management method as claimed in claim 1, comprising further steps of:
saving the connection whitelist to a first storage unit corresponding to the first Bluetooth unit (112) by the processing unit (116); and
saving the connection whitelist to a second storage unit corresponding to the second Bluetooth unit (114) by the processing unit (116).

4. The dual Bluetooth connection management method as claimed in claim 3, comprising further steps of:
obtaining a second identification data corresponding to a second electronic device by the first Bluetooth unit (112);
re-establishing the connection whitelist based on the second identification data by the processing unit (116); and
updating the connection whitelist containing the second identification data to the second storage unit corresponding to the second Bluetooth unit (114) by the processing unit (116).

5. The dual Bluetooth connection management method as claimed in claim 1, wherein, the first Bluetooth unit (112) comprises a classic Bluetooth device, and the second Bluetooth unit (114) comprises a Bluetooth Low Energy device.

6. A dual Bluetooth connection management system (100), adapted to an electronic device (110), and **characterized in that** the dual Bluetooth connection management system (100) comprises:
a first Bluetooth unit (112), connecting to a first electronic device (120) through a first wireless network (132), obtaining a first identification data corresponding to the first electronic device (120), and performing an authentication procedure to determine whether the first electronic device (120) is authenticated based on the first identification data;
a second Bluetooth unit (114); and
a processing unit (116), electrically connected to the first Bluetooth unit (112) and the second Bluetooth unit (114), establishing a connection whitelist based on the first identification data, and providing the connection whitelist to the first Bluetooth unit (112) and the second Bluetooth unit (114);
wherein, the second Bluetooth unit (114) accepts data transmitted from the first electronic device (120) corresponding to the connection whitelist.

7. The dual Bluetooth connection management system as claimed in claim 6, wherein, the second Bluetooth unit (114) connects to the first electronic device (120) through a second wireless network (134) to obtain the first identification data corresponding to the first electronic device (120), and determines whether the first identification data is within the connection whitelist;
when the first identification data is within the connection whitelist, the second Bluetooth unit (114) suspends the authentication procedure;
when the first identification data is without the connection whitelist, the second Bluetooth unit (114) performs the authentication procedure.

8. The dual Bluetooth connection management system (100) as claimed in claim 6, wherein, the processing unit (116) saves the connection whitelist to a first storage unit corresponding to the first Bluetooth unit (112); and
the processing unit (116) saves the connection whitelist to a second storage unit corresponding to the second Bluetooth unit (114).

9. The dual Bluetooth connection management system (100) as claimed in claim 8, wherein, the first Bluetooth unit (112) obtains a second identification data corresponding to the second electronic unit;
the processing unit (116) re-establishes the connection whitelist based on the second identification data; and
the processing unit (116) updates the connection whitelist containing the second identification data to the second storage unit corresponding to the second Bluetooth unit (114).

10. The dual Bluetooth connection management system (100) as claimed in claim 6, wherein, the first Bluetooth unit (112) comprises a classic Bluetooth device, and the second Bluetooth unit (114) comprises a Bluetooth Low Energy device.
